Europäisches Patentamt

European Patent Office

Office européen des brevets

(11) Publication number: **0 142 955**
**A1**

(12) **EUROPEAN PATENT APPLICATION**

(21) Application number: **84307515.1**

(22) Date of filing: **31.10.84**

(51) Int. Cl.⁴: **F 21 Q 1/00**
**B 23 K 26/02**

(30) Priority: **12.11.83 GB 8330257**

(43) Date of publication of application:
**29.05.85 Bulletin 85/22**

(84) Designated Contracting States:
**DE FR GB IT**

(71) Applicant: **LUCAS INDUSTRIES public limited company**
**Great King Street**
**Birmingham, B19 2XF(GB)**

(72) Inventor: **Cummings, Michael**
**12 Gloucester Street**
**Coventry(GB)**

(74) Representative: **Pearce, Anthony Richmond et al,**
**Marks & Clerk Alpha Tower Suffolk Street**
**Queensway Birmingham B1 1TT(GB)**

(54) **Production of optical assemblies for lamp units.**

(57) In the manufacture of an optical assembly for a lamp unit, radiation from a concentrated radiation source such as a laser (20) is passed through lenses (13) of a lens element (12) forming part of the optical assembly. The lenses (13) direct the radiation onto localised regions (23) of a light obstructing layer (19) on the lens element so as to render the localised regions (23) light transmitting, such localised regions (23) being thereby in accurate registration with the lenses (13).

FIG. 2.

EP 0 142 955 A1

Croydon Printing Company Ltd.

PRODUCTION OF OPTICAL ASSEMBLIES FOR LAMP UNITS

This invention relates to a method of producing an optical assembly for a lamp unit, the optical assembly being composed of a lens element and a baffle.

In recent years, significant attention has been given to the design of lamp units which maintain a good distinction between their energised and de-energised states even in conditions of bright external illumination. Such designs reduce the possibility of externally incident light being reflected internally of the lamp unit and then being re-emitted, which might otherwise give the impression that the lamp unit is energised when in fact it is not (so-called "phantom" signals).

In one particular type of design, light rays from a light source of the lamp unit are collimated by a reflector or a Fresnel lens and are directed towards a lens element having a plurality of individual lenses. These lenses then direct respective pencils of light rays through respective light-transmitting interstices in an otherwise opaque baffle. This arrangement enables most of the light emitted by the light source to be projected from the lamp unit, while the baffle effectively prevents externally incident light from reaching the interior of the lamp unit and being re-emitted. An example of a lamp unit of this design is described in our UK patent No. 1 591 013.

The provision of the baffle also has the effect of masking internal components of the lamp unit from view. This gives rise to advantages in the styling of the lamp unit, since it becomes possible to make coloured filters within the lamp unit practically indiscernible when the lamp unit is not energised. This in turn enables the lamp unit to be designed so that it matches its surroundings when unenergised, being then of the so-called "indiscernible" type.

The angular divergence of the light rays emerging from the baffle is governed by several factors, including the distance between the lenses and the baffle, the lateral spacing between the individual lenses, and the size of the light transmitting interstices in the baffle. For reasons of economy in the use of materials, the lens element should be made as thin as possible. This means that small, closely spaced lenses and baffle interstices are needed in order to avoid undue divergence of the emerging light rays. As a result, the size of the baffle interstices and their positioning relative to the lenses become critical.

If the interstices are too small or are offset from the axes of the lenses, then there will be significant cut-off in the light passing through the baffle, and the output intensity of the lamp unit will be reduced. On the other hand if the interstices of the baffle are made too large, then there will be a greater chance of externally incident light being able to penetrate the baffle, being reflected internally within the lamp unit and then re-emitted. In addition, the internal components of the lamp unit become rather more visible, thereby destroying the styling advantages mentioned previously.

Where the lens element is moulded from a plastics material, accurate registration of the baffle interstices with the lenses can be confounded by unpredictable shrinkage of the lens element. It is possible to avoid this problem by arranging for formations to be moulded on the opposite surface of the lens element to that on which the lenses are provided, these formations being in accurate alignment with the lenses and being used as a registration guide for the baffle. Such alignment between the formations and the lenses is retained even if the lens element shrinks during its moulding. The formations may, for example, be in the form of small recesses or projections, in which case the baffle can be produced by covering the surface of the lens element with an opaque material except at the locations where the recesses or projections are provided.

Unfortunately, however, the presence of these formations causes a deterioration in the optical properties of the lens element. More particularly, the flanks of the formations impose a limitation on the passage of the light. Although this limitation can be overcome by increasing the width of the formations, this of necessity also increases the size of the baffle interstices and thereby re-introduces other problems as mentioned previously.

It is an object of the present invention to obviate the various problems and disadvantages described above.

According to the present invention, there is provided a method of producing an optical assembly for use in a lamp unit, comprising the steps of:-
(a)    providing a lens element which has a plurality of lenses on one surface thereof;
(b)    providing on or adjacent to an opposite surface of the lens element a layer of material which, in the finished assembly, is to be at least partly light obstructing; and

(c) projecting rays of radiation from a concentrated radiation source (e.g. a laser) onto said one surface of the lens element so that the lenses direct said rays onto localised regions of said material and thereby cause the material to be removed by said rays in said localised regions, whereby said localised regions are rendered light-transmitting in the finished assembly.

Preferably, the radiation is of a wavelength not substantially different from that of the light which the assembly will receive in said lamp unit, in which case said rays are projected onto the lens element in a pattern simulating that of the light rays which it will receive in said lamp unit. For example, where the lamp unit contains a light source positioned at the focus of a parabolic or paraboloidal reflector, the rays of radiation are projected onto the lens element in a parallel manner.

In a particular example of the method, said material is light-obstructing in the first instance. The material can be applied to said opposite surface of the lens element as a coating, in which case the coating should be thick enough to be substantially opaque but not so thick that excessive amounts of heat are generated, which might otherwise damage the lens element.

The rays of radiation can be subjected to a small lateral motional perturbation to increase the size of the localised regions of the material which are removed or optically affected as aforesaid.

The invention will now be further described, by way of
example only, with reference to the accompanying
drawings, in which:-

Figure 1 is a schematic sectional view of a lamp unit
including a lens element and a baffle;

Figures 2 and 3 are diagrams illustrating the
production of the baffle by a method according to the
present invention; and

Figure 4 is a diagram illustrating a modified method of
producing the baffle.

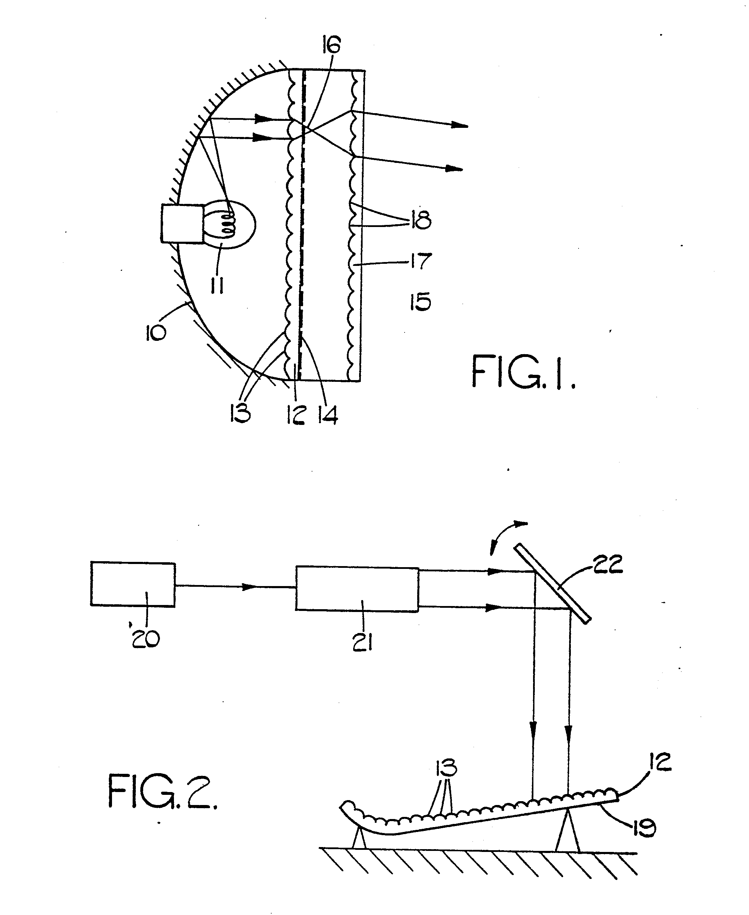

The lamp unit shown in Figure 1 is composed of a
collimator 10 which directs light emitted by an
incandescent bulb 11 towards a lens element 12. In the
illustrated construction the collimator is in the form
of a parabolic or paraboloidal reflector, at whose
focus the bulb 11 is positioned, although a Fresnel
lens may equally well be used. A plurality of lenses
13 are formed on a surface of the lens element 12 which
faces the reflector 10, while a baffle 14 is provided
on the opposite surface of the lens element. The
baffle 14 includes a plurality of light-transmitting
interstices 15 each of which is disposed on the optical
axis of a respective one of the lenses 13, the
remainder of the baffle being opaque or otherwise
light-obstructing. Each of the lenses 13 receives a
bundle of parallel light rays from the reflector 10 and
focusses the same through the respective interstice 15
as indicated at 16, each interstice 15 being limited in
size to that necessary to transmit substantially the
whole of the respective bundle of light rays. After
emerging from the baffle 14, the light rays impinge
upon an external light-transmitting cover 17 which is provided with lensing 18 to re-direct and re-distribute the light rays into the desired pattern for the output beam of the lamp unit.

As indicated previously, this construction of lamp unit has the advantage that because the interstices 15 occupy only a small proportion of the total area of the baffle 14, there is little chance of externally incident light passing through the baffle, being reflected laterally by the lamp unit and then re-emerging through the baffle, which might otherwise give rise to "phantom" signals. Furthermore, the baffle 14 significantly reduces the visibility of the lens element 12 and the components disposed behind it so that even in cases where the lens element 12 is coloured (such as in a signalling lamp for a vehicle), the external appearance of the lamp unit can be designed so as to match its surroundings when the bulb 11 is not energised.

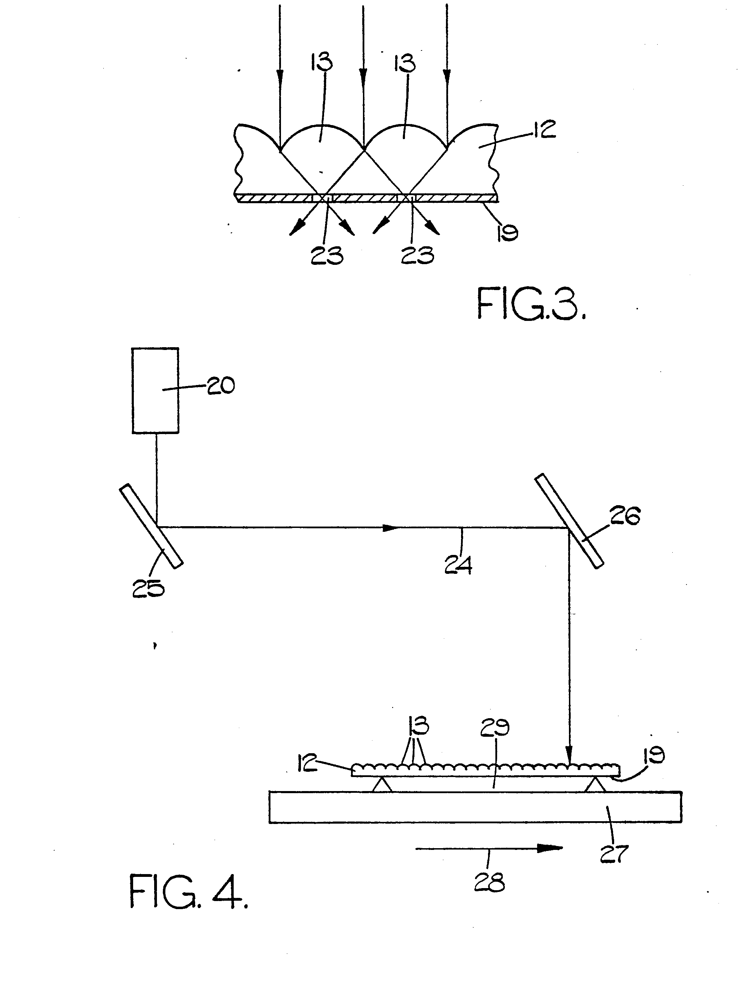

The method by which the baffle 14 is produced will now be explained with reference to Figures 2 and 3. Firstly, a continuous mask 19 of optically opaque material is deposited on or secured to the surface of the lens element 12 opposite that on which the lenses 13 are provided. Radiation from a concentrated radiation source 20 is then directed onto the lens element 12 from the lens side thereof. In the illustrated arrangement, the radiation source 20 takes the form of a laser whose output beam is expanded by a beam expander 21, the resultant expanded beam being scanned across the lens element. Such scanning is accomplished by any convenient combination of deflecting mirrors or prisms, and/or by movement of the lens element relative to the laser beam. A single tiltable mirror 22 is shown by way of example in Figure 2.

As can be seen to advantage in Figure 3, the lenses 13 focus individual pencils of the laser beam in the same manner as they focus light rays from the incandescent bulb 11 in the finished lamp unit, so that each said pencil is directed onto a highly localised region 23 of the mask. The energy of the laser beam then causes the material of the mask 19 to be burned away or otherwise removed in those regions, thereby leaving a light transmitting window. Those parts of the mask 19 remaining intact form the light obstructing portions of the baffle 14, while the windows thus produced form the interstices 15.

It will be manifest from the above description that the laser beam simulates the light pattern which the lens element 12 will receive in the finished lamp unit, i.e. parallel light rays. Accordingly, if the lens element 12 is positioned relative to the laser beam in the same orientation as it will ultimately adopt relative to the axis of the reflector 10, then the lenses 13 will direct the laser light onto the mask 19 in exactly the same way as they will focus the light from the incandescent bulb 11 (assuming of course that the wavelength of the laser light does not differ substantially from the spectrum of the light emitted by the bulb). Accordingly, the windows which the laser light forms in the mask are automatically produced in the correct position and are of the correct size for optimum transmission of the light from the bulb 11 in the finished lamp unit.

Any suitable coating or laminate can be employed for the mask 19, as long as it is capable of absorbing a significant proportion of the incident laser radiation. Excessive heat generation within the mask is however to be avoided, since this might cause damage to the lens element 12 (particularly if this is made of plastics material). For this reason, the mask should be the thinnest possible compatible with still being opaque to the light emitted from the bulb 11.

As indicated above, the laser 20 should be chosen so that the lens element 12 transmits and refracts the laser light in substantially the same way as it does the light from the bulb 11. In the case of a lens element 12 made of perspex, excellent results have been obtained using a 6OW Nd-YAG laser whose output radiation has a wavelength of 1.06 micrometre: the transmittance of a 3mm thick perspex plate at this wavelength is approximately 90% of that at a wavelength in the middle of the visible spectrum, while the refractive indices differs by only 0.7% for these two wavelengths. This is of course only an example of a suitable laser which can be used, and other types of laser (e.g. an Argon gas laser) can equally well be employed.

The size of the windows formed in the mask can be altered by varying the lasing power, by changing the rate at which the laser beam scans the lens element, or (where an increase in window size is desired) by "wobbling" the beam, i.e. by applying a cyclic perturbation to the angle of incidence of the beam on the lens element, for example by oscillating the mirror 22.

A modification of the above-described method is illustrated in Figure 4, wherein the beam expander is omitted and the laser beam (referenced 24) is directed onto the lens element 12 by way of a pair of deflecting mirrors 25 and 26. The lens element 12 is supported by a carriage 27 which is moved in the direction of arrow 28 in order to achieve scanning of the laser beam 24 across the lens element. An air gap 29 is left between the lens element and the carriage to allow dissipation of the material of the mask 19 which is burned away by the laser beam.

In a specific example of the method using the apparatus of Figure 4, a laser 20 of the YAG type generating light of 1.06 micrometre wavelength was employed and was operated in a Q switched mode. It was found that the laser beam incident upon the lens element 12 was slightly diverging in character, 8 to 10 mm in diameter, and rather non-uniform in intensity across its cross-section. The lens element 12 used was moulded from perspex and had a thickness of 4mm, and the lenses 13 were part-spherical in shape having a radius of 1.9 mm and had their optical axes spaced apart by 2.25 mm. The mask 19 was produced by coating the plain (i.e. non-lensed) surface of the lens element with a 0.05 mm thick layer of black acrylic paint. After placing the coated lens element on the carriage 27, the laser 20 was adjusted to a power of 40W and the carriage was traversed relative to the laser beam at a rate of 30 mm/sec. It was found that the laser beam removed the paint without damaging the lens element, leaving slits 0.5 mm wide at the foci of the lenses 13. It was also found that removal of the paint was not particularly sensitive to the frequency of the Q switching, and that indeed satisfactory results could be obtained with the laser 20 operating in a continuous mode.

In a second example, the lens element 12 was mounted on the carriage 27 in such an orientation that the laser beam 24 was tilted at an angle of 10° from the perpendicular to the lens element. The procedure described above was then repeated, and it was found that slits of 0.5 mm width were again produced in the coating of paint. In this example, however, the slits were offset by 10° from the axes of symmetry of the lenses 13. The resultant assembly of lens element and baffle thus had an optical axis which was angularly offset from the normal to the lens element itself.

In a third example, the mask 19 was produced by aluminising the plain surface of the lens element 12 by vacuum deposition, instead of by coating with black paint. The procedure given in the first example above was then repeated, except that the power of the laser. 20 was decreased to 10W and the speed of the carriage 27 was increased to 50 mm/sec. It was found that the resultant slits in the aluminium mask 19 were now 0.25 mm in width.

The above-described methods of producing the baffle 14 ensure automatically that the interstices 15 are in accurate registration with the lenses 13 and are of the correct size, thereby overcoming the problems mentioned earlier. Moreover, accurate positioning of the interstices is easily achieved regardless of the desired final orientation of the lens element, even in cases where the lens element is of a curved or otherwise awkward shape, as is the case for lens elements of the so-called "wrap-around" type, for example as depicted in Figure 2. The processing of the lens element by a radiation source also lends itself to mass production techiques, thereby enabling the baffle to be produced in an economical manner.

CLAIMS:

1. A method of producing an optical assembly for use in a lamp unit, comprising the steps of:-
(a) providing a lens element which has a plurality of lenses on one surface thereof;
(b) providing on or adjacent to an opposite surface of the lens element a layer of material which, in the finished assembly, is to be at least partly light obstructing; and
(c) projecting rays of radiation from a concentrated radiation source onto said one surface of the lens element so that the lenses direct said rays onto localised regions of said material and thereby cause the material to be removed by said rays in said localised regions, whereby said localised regions are rendered light-transmitting in the finished assembly.

2. A method as claimed in claim 1, wherein the radiation is of a wavelength not substantially different from that of the light which the assembly will receive in said lamp unit.

3. A method as claimed in claim 1 or 2, wherein said rays are projected onto the lens element in a pattern simulating that of the light rays which it is destined to receive in said lamp unit in service.

4. A method as claimed in claim 3, wherein the rays of radiation are projected onto the lens element in a parallel manner.

5. A method as claimed in any preceding claim, wherein said material is light-obstructing in the first instance.

6. A method as claimed in any preceding claim, wherein the material is applied to said opposite surface of the lens element as a substantially opaque coating.

7. A method as claimed in any preceding claim, wherein the rays of radiation are subjected to lateral motional perturbation to increase the size of the localised regions of the material which are removed.

FIG.1.

FIG.2.

0142955

FIG.3.

FIG. 4.

## EUROPEAN SEARCH REPORT

0142955

. Application number

EP 84 30 7515

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl.4) |
| X | US-A-4 172 219 (DEML) <br><br> * Whole document * <br><br> --- | 1,3-6 | F 21 Q  1/00 <br> B 23 K 26/02 |
| A,D | GB-A-1 591 013 (LUCAS) <br><br> * Page 3, lines 33-34 * <br><br> --- | 1 | |
| A | US-A-4 301 353 (SUENAGA) <br><br> * Figure 4 * <br><br> ----- | 7 | |
| | | | TECHNICAL FIELDS SEARCHED (Int. Cl.4) |
| | | | F 21 Q <br> B 23 K <br> G 03 B |

The present search report has been drawn up for all claims

| Place of search | Date of completion of the search | Examiner |
|---|---|---|
| THE HAGUE | 14-02-1985 | FOUCRAY |